**Europäisches Patentamt**

**European Patent Office**

**Office européen des brevets**

(11) Veröffentlichungsnummer: **0 216 728**
**B1**

(12) EUROPÄISCHE PATENTSCHRIFT

(45) Veröffentlichungstag der Patentschrift:
23.11.89

(21) Anmeldenummer: 86810291.4

(22) Anmeldetag: 02.07.86

(51) Int. Cl.⁴: **B23K 26/02**, G02B 7/04

(54) Verfahren und Vorrichtung zum Fokussieren einer Linse bei der Laserstrahl-Bearbeitung eines Werkstückes.

(30) Priorität: 24.09.85 CH 4121/85

(43) Veröffentlichungstag der Anmeldung:
01.04.87 Patentblatt 87/14

(45) Bekanntmachung des Hinweises auf die Patenterteilung:
23.11.89 Patentblatt 89/47

(84) Benannte Vertragsstaaten:
AT BE CH DE FR GB IT LI LU NL SE

(56) Entgegenhaltungen:
GB-A- 2 064 399
US-A- 3 696 230
US-A- 4 358 659

(73) Patentinhaber: **Laser-Work AG, Dättlikonerstrasse 5,
CH-8422 Pfungen(CH)**

(72) Erfinder: **Furrer, Alfred M., Sonnhalde 14,
CH-8422 Dättlikon(CH)**

(74) Vertreter: **Frauenknecht, Alois J. et al, c/o PPS
Polyvalent Patent Service AG Mellingerstrasse 1,
CH-5400 Baden(CH)**

## Beschreibung

Die vorliegende Erfindung bezieht sich auf ein Verfahren und eine Vorrichtung zum Fokussieren einer Linse bei der Laserstrahl-Bearbeitung eines Werkstückes, wobei eine in einer Linsenfassung gehaltene Linse mittels eines Antriebsmotors entlang der optischen Achse bewegt wird.

Eine derartige Vorrichtung und ein entsprechendes Verfahren sind in der US-A 4 358 659 beschrieben. Die Fokussierlinse ist dabei in einer drehbaren zylindrischen Hülse gelagert, die unten ein angeflanschtes Zahnrad aufweist, in welchem die Zähne des Zahnrades eines Antriebsmotors hineingreifen. Die Hülse besitzt ein Außengewinde und ist in einem Zylinder mit entsprechendem Innengewinde hineingeschraubt. Zur Einstellung der richtigen Brennfleckposition wird die Hülse auf- und abbewegt, so daß die Linse eine Drehung um ihre Achse erfährt. Da erfahrungsgemäß Linsen nie vollkommen rotationssymmetrisch hergestellt sind, ergibt sich stets ein elliptischer Brennfleck. Eine Drehung eines solchen Brennflecks ist jedoch bei der Laserstrahl-Bearbeitung besonders ungünstig. Um das Drehen der Fokussierlinse beim Einstellen des Brennflecks zu verhindern, wird gemäß der CH-A 642 891 die Fokussierlinse mit ihrer Linsenfassung in eine zylindrische Hülse befestigt, die mittels eines Gewinderings in Richtung der optischen Achse in einem Gehäuse verschiebbar ist.

In beiden der oben beschriebenen Fällen muss die verschiebbare Hülse verhältnismäßig lang sein, um die Lage der Linse zu sichern. In Folge der Wärmedehnungen ist es selbstverständlich wenig günstig, daß eine lange Hülse, die teilweise und nicht gleichmäßig erwärmt wird, in einem ebenfalls ungleichmäßig erwärmten Gehäuse verschoben werden muß. Bei dieser Funktion kann es zum Einklemmen der Hülse kommen. Die ziemlich massive Linsenfassung der Hülse ist ebenfalls erwärmt, was eine Wärmedehnung zur Folge hat, sie ist jedoch nicht gekühlt. Seine Kühlung in diesem Teil ist nur für das unbewegliche Gehäuse und nur in der CH-A 642 891 vorgesehen.

Die Aufgabe der vorliegenden Erfindung ist ein Verfahren und eine Vorrichtung zur Durchführung des Verfahrens zu schaffen, welche die Nachteile des Vorbekannten nicht aufweisen und eine präzise Führung der in der Linsenfassung gehaltenen Linse sichern, wobei die Genauigkeit der Führung noch zusätzlich durch eine verbesserte Kühlung erreicht wird.

Die vorgenannte Aufgabe wird bei einem Verfahren der eingangs genannten Art dadurch gelöst, daß die Linse mittels wenigstens zwei gleichbewegten auf der Linsenfassung befestigten Spindelbolzen in Richtung der optischen Achse in die, die gewünschte Brennfleckposition erzeugende Lage durch Drehung von die Spindelbolzen umfassenden, mit einem inneren Gewinde versehenen dieselbe Anzahl Zähne aufweisenden Zahnrädern in einem Hohlraum eines Mittelkörpers eingestellt wird, wobei die Zahnräder durch den Antriebsmotor mit einem Antriebszahnrad über ein Zahnband angetrieben werden und die gesamte Antriebseinheit von einer Tragplatte getragen wird, und daß die Linsenfassung mittels wenigstens eines inneren Kühlkanals gekühlt wird. Der Vorteil dieser Lösung besteht darin, daß die Spindelbolzen die Linse in der axialen Richtung verschieben ohne die Linse zu drehen und daß da keine langen Teile vorhanden sind, die infolge der Wärmedehnung deformiert werden können. Die Kühlung der Linsenfassung kühlt selbstverständlich auch die Linse und beschränkt wesentlich Wärmedeformationen, wobei die Spindelbolzen auch die Kühlfunktion erfüllen können. Es ist selbstverständlich, daß die Gewindebolzen gleiche Gewindesteigerungen aufweisen. Somit wird die regelmäßige Verschiebung der Linse ohne Deformation gesichert.

Nach einer zweckmäßigen Ausführungsform gemäß Anspruch 2 wird die Linse über die Linsenfassung mittels drei Spindelbolzen eingestellt. Wie allgemein bekannt, wird eine Ebene durch drei Punkte definiert. Darum ist die Aufhängung der Linsenfassung der Linse mit drei Spindelbolzen die günstigste. Selbstverständlich könnte man auch mehrere Spindelbolzen verwenden, was jedoch überflüssig wäre.

Es ist zweckmäßig, wenn nach Anspruch 3 ein Kühlmittel in die Linsenfassung durch wenigstens eine axiale Bohrung in wenigstens einem Spindelbolzen zu- und/oder abgeführt wird.

Diese Weiterbildung gibt eine einfache Möglichkeit, das Kühlmittel, z.B. Wasser oder Öl, in die Linsenfassung zu führen und wieder abzuführen.

Gemäß Anspruch 4 ist es vorteilhaft, daß das Kühlmittel direkt durch die axiale Bohrung eines Spindelbolzens zur Linsenfassung zugeführt und direkt durch die andere Bohrung eines anderen Spindelbolzens aus der Linsenfassung abgeführt wird. Bei dieser Variante verwendet man direkt die Bohrungen zur Leitung des Kühlmittels.

Gemäß einer anderen Variante nach Anspruch 5 wird das Kühlmittel durch in wenigstens eine Bohrung eines Spindelbolzens eingelegte Röhrchen geführt. In diesem Fall reicht also nur eine einzige Bohrung eines Spindelbolzens, um das Kühlmittel in die Linsenfassung zuzuführen und abzuführen.

Zweckmäßigerweise werden durch die axiale Bohrung eines Spindelbolzens die Temperatur der Linsenfassung und/oder der Gasdruck unter der Linse gemessen. Ebenfalls kann durch wenigstens eine axiale Bohrung mit Hilfe einer Faseroptik eine Bildinformation zur Auswertung nach außen geführt werden.

Auf diese Weise erreicht man eine gute Übersicht über die Lage der Vorrichtung und über den Verlauf des Verfahrens.

Es ist vorteilhaft, wenn durch wenigstens eine axiale Bohrung eines Spindelbolzens in den Hohlraum der Düse ein Schneid- oder Schutzgas zugeführt wird. Durch diese zweckmäßige Gaszuführung entfällt die Notwendigkeit, einen speziellen Gasanschluß für den Düsenkörper anzuordnen.

Die Vorrichtung zur Durchführung des Verfahrens ist nach Anspruch 8 so ausgebildet, daß die die Linsenfassung der Linse tragenden Spindelbolzen mit ihren Gewinden in inneren Gewinden der Zahnräder eingeschraubt sind und daß in die Zahnräder die Zähne eines Zahnbandes eingreifen, wobei die Zähne des Zahnbandes in ein Zahnrad eingreifen, das mit einer Welle des Antriebsmotors verbunden ist. Zweckmäßigerweise verwendet man einen Elektromotor, obwohl selbstverständlich auch andere Antriebe, z.B. ein hydraulischer Antrieb, in Frage kommen.

Um das Zahnband gespannt zu halten, ist gemäß dem Anspruch 9 der Antriebsmotor in der Zahnband-Ebene mit dem Zahnrad verschiebbar gelagert und mittels Führungsbolzen in länglichen Ausnehmungen feststellbar gelagert.

Um eine einfache Abstützung der Zahnräder zu erreichen, sind nach Anspruch 10 die Zahnräder der Spindelbolzen mit je einer Hülse versehen, wobei die Hülse im Kontakt mit je einem radialen Teil des axial-radialen Lagers steht und der axiale Teil des axial-radialen Lagers die obere Fläche des Zahnrades abstützt. Somit wird sowohl die vertikale als auch die horizontale Lage der Zahnräder eindeutig gesichert.

Damit man die Vorrichtung den verschiedenen Fokuslängen anpassen könnte, kann man nach Anspruch 11 wenigstens ein Verlängerungskörper mit einem zylindrischen Hohlraum versehen, der mit Verbindungsmitteln zur Verlängerung des Mittelkörpers versehen ist. Wenn man z.B. mit der Verwendung von drei verschiedenen Fokuslängen rechnet, ist die Grundvorrichtung für die kürzeste Fokuslänge dimensioniert, eine längere Fokuslänge erreicht man mit einem ersten Verlängerungskörper, eine noch größere Fokuslänge mit einem zweiten, längeren Verlängerungskörper.

Es ist zweckmäßig, wenn der Mittelkörper und eventuell auch der oder die Verlängerungskörper mit Kühlkanälen versehen sind. Als Kühlmittel kann in diesem Fall zweckmäßig wieder Wasser oder Öl angesetzt werden.

Um das beschriebene Verfahren realisieren zu können, ist wenigstens einer der Spindelbolzen mit einer axialen Bohrung zur Führung des Kühlmittels für die Linsenfassung der Linse und/oder zur Führung der Anschlüsse zum Messen der Temperatur der Linsenfassung und/oder zum Messen des Gasdruckes unterhalb der Linse und/oder zur Führung der Faseroptik für eine Bildinformation zur Auswertung nach außen versehen.

Gemäß Anspruch 14 besteht die Linsenfassung aus einem oberen Teil und einem unteren Teil, und in wenigstens einer Kontaktfläche dieser zwei Teile ist wenigstens ein Kühlkanal ausgebildet. Diese technische Lösung ist sehr wirtschaftlich und ermöglicht eine schnelle Demontage der Linsenfassung und eine Kontrolle der Kühlkanäle. Die gegenseitige Verbindung des oberen und des unteren Teils der Linsenfassung kann z.B. mittels eines Bajonettverschlusses realisiert werden. Selbstverständlich sind auch andere Schnellverschlüsse zu diesem Zweck geeignet.

Nach einer Weiterbildung gemäß Anspruch 15 ist der Mittelkörper mit einem Deckel in Form einer Platte mit einem Durchlaß versehen und in diesem Deckel sind die axial-radialen Lager zur Abstützung der Zahnräder eingebettet. Diese Ausbildung ermöglicht eine schnelle Montage und Demontage der Vorrichtung und sichert ausreichend die vertikale Lage der Zahnräder, die von unten in Folge des Überdruckes unter der Linse auf Druck nach oben beansprucht sind.

Der Erfindungsgegenstand wird anhand der beiliegenden Zeichnungen näher erläutert. Die für die Verständlichkeit der Erfindung unnötigen Einzelheiten sind wegen der Übersichtlichkeit weggelassen worden. So z.B. wurden keine Dichtungsringe, Schraubenverbindungen oder Bajonettverbindungen eingezeichnet, weil diese selbstverständlich jeder Durchschnittsfachmann automatisch richtig verwenden kann.

Es zeigen:

Fig. 1 einen vertikalen Schnitt durch die Vorrichtung, wobei im Bereich des linken Lagers der Schnitt durch die Bohrung für den Durchgang des Spindelbolzens geführt ist,

Fig. 2 eine Draufsicht auf den Mittelteil der Vorrichtung, wobei die Verteilung der Spindelbolzen und des Zahnrades des Antriebmotors sichtbar sind, und

Fig. 3 eine Ansicht auf die untere Seite des oberen Teils der Linsenfassung mit den Kühlkanälen.

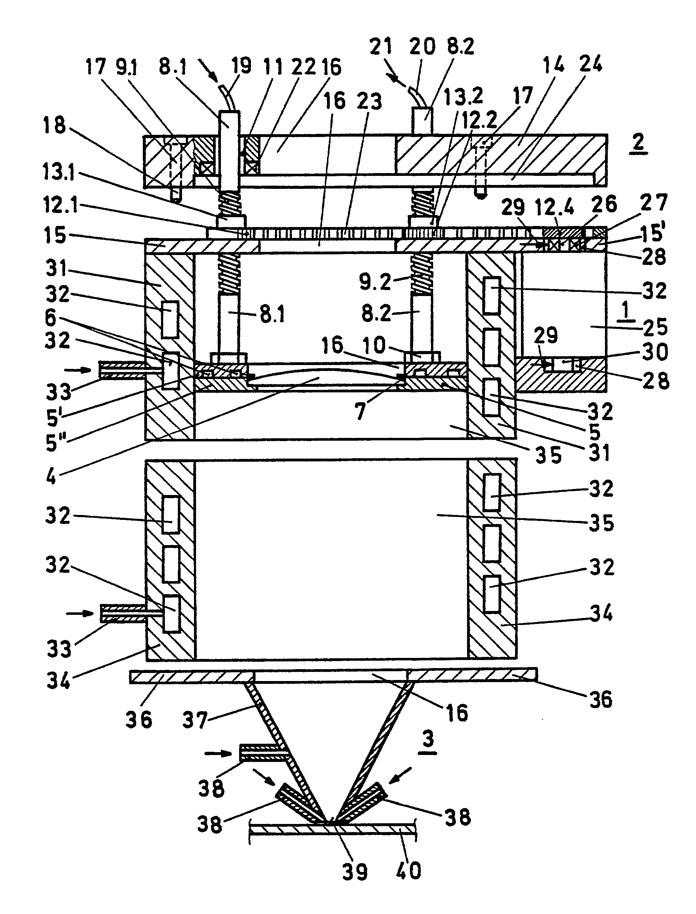

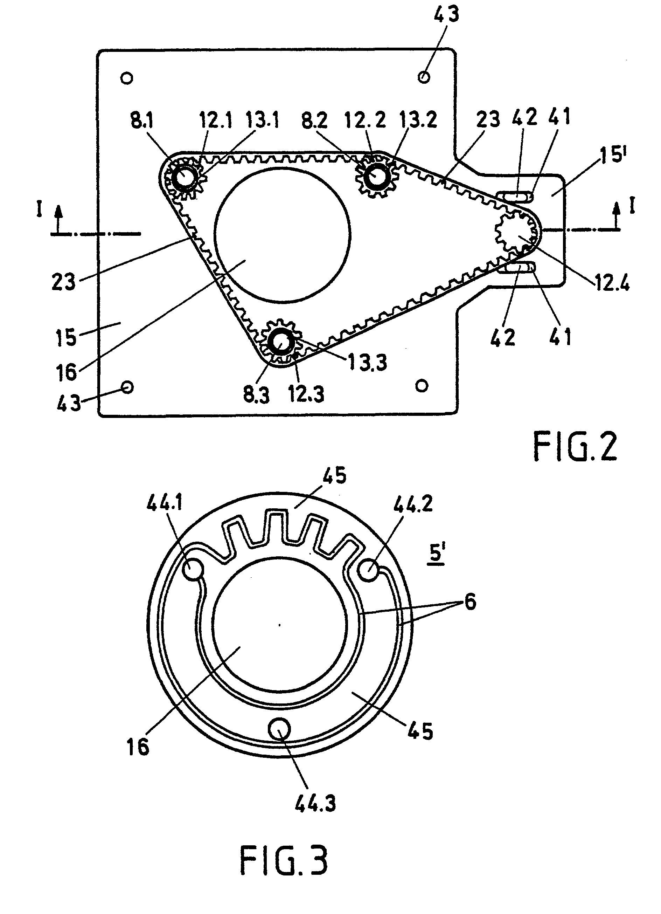

Gemäss Fig. 1 besteht die Vorrichtung zur Durchführung des Verfahrens aus einem Mittelteil 1, der mit einem Deckel 2 versehen ist. Wegen der Übersichtlichkeit ist zwischen diesen zwei Teilen eine Lücke dargestellt, d.h. der Deckel 2 ist in einer teilweise höhergestellten Lage gezeichnet. Mit der Bezugsziffer 3 ist eine Düse bezeichnet. Eine Linse 4 ist in einer Linsenfassung 5 gehalten, die aus einem oberen Teil 5' und einem unteren Teil 5" besteht. Die Konstruktion der Linsenfassung muss selbstverständlich ausreichend massiv sein, weil unter der Linsenfassung 5 und der Linse 4 ein ziemlich hoher Gasdruck vorhanden ist. In der unteren Fläche des oberen Teils 5' der Linsenfassung 5 sind Kühlkanäle 6 ausgebildet. Die Linse 4 ist in der Linsenfassung 5 mit Hilfe von einer ringförmigen Halterung 7 fixiert, die an sich bekannt und in dieser Zeichnung nur schematisch dargestellt ist. Aus den drei Spindelbolzen 8.1 bis 8.3 mit axialer Bohrung sind in der Fig. 1 nur die Spindelbolzen 8.1 und 8.2 sichtbar. Damit auch die obere Lagerung der Spindelbolzen 8.1 bis 8.3 sichtbar wäre, ist im oberen Teil des Spindelbolzens 8.1 ein Schnitt durch sein axial-radiales Lager 22 dargestellt. Jeder der Spindelbolzen 8.1 bis 8.3 ist in einem Bereich mit je einem Gewinde 9.1 bis 9.3 versehen, wobei diese Gewinde gleich sind. Die Spindelbolzen 8.1 bis 8.3 sind mit ihren hinteren Teilen in der Linsenfassung 5 der Linse 4 eingeschraubt und mit je einer Fixiermutter 10 versehen. Im Deckel 2 sind Bohrungen 11 für den Durchgang der Spindelbolzen 8.1 bis 8.3 vorgesehen, wobei in der Fig. 1 nur die Bohrung 11 für den Spindelbolzen 8.1 sichtbar ist. Jeder Spindelbolzen 8.1 bis 8.3 ist in einem Zahnrad 12.1 bis 12.3 eingeschraubt. Es ist selbstverständlich, dass die Zahnräder 12.1 bis 12.3 mit inneren Gewinden versehen sind, die den äusseren Gewinden 9.1 bis 9.3 der Spindelbolzen 8.1 bis 8.3 entsprechen. Das vierte Zahnrad 12.4 ist ein Antriebszahnrad. Die Zahnräder 12.1 bis 12.3 sind mit Hülsen 13.1 bis 13.3 versehen, die als Abstützung für je ein Lager dienen. Der Deckel 2 ist im wesentlichen durch eine Platte 14 gebildet. Der Mittelteil 1 trägt oben eine Tragplatte 15, auf die sich die Zahnräder 12.1 bis 12.3 abstützen. Die Tragplatte 15 ist mit einer Verlängerung 15' versehen, die zur Halterung und Führung des Antriebmotors 25 dient. Sowohl die Platte 14 als auch die Tragplatte 15 sind mit je einem Durchlass 16 versehen, die den freien Durchgang der Laserstrahlen ermöglichen. Im zusammenmontierten Zustand ist der Deckel 2 mit der Tragplatte 15 mittels Schrauben 17 verbunden. Mit der Bezugsziffer 18 sind die herausragenden Teile der Schrauben 17 dargestellt, die in der getrennten Lage des Deckels frei sichtbar sind. In die nicht sichtbare Bohrung im Spindelbolzen 8.1 führt ein Kühlflüssigkeitseintritt 19, der in diesem Beispiel als ein flexibles Röhrchen ausgebildet ist. Dementsprechend ist die Bohrung des Spindelbolzens 9.2 mit einem Kühlflüssigkeitsaustritt 20 versehen. Anstelle der dargestellten Röhrchen können an sich bekannte Nippel mit den Enden der Spindelbolzen 8.1 bis 8.3 verbunden und zur Kühlmittelführung direkt die Bohrungen verwendet werden. Die Bezugsziffer 21 bezeichnet die Richtungen des Kühlmediumflusses für die Linsenfassung 5. Im Schnitt durch die Platte 14 ist auch ein Schnitt durch das schon erwähnte axial-radiale Lager 22 veranschaulicht. Auf der Tragplatte 15 ist ein Zahnband 23 abgestützt, das alle vier Zahnräder 12.1 bis 12.4 umschlingt. In der Platte 14 ist eine Ausnehmung für dieses Zahnband 23 und für alle Zahnräder 12.1 bis 12.4. Die Lage wird später anhand der Fig. 2 besser sichtbar. Der schon erwähnte Antriebsmotor 25 ist mit einer Welle 26 versehen, die ein Lager 27 drehbar hält. Der untere Teil des Antriebsmotors 25 ist mit einem Halterungsteil 30 versehen, wobei sowohl dieser Halterungsteil 30 als auch das Lager 27 linear beweglich angeordnet sind und unter Druckbeanspruchung in Richtung der Pfeile 29 stehen. Somit wird erreicht, dass sich das Lager 27 und der Halterungsteil 30 in einem Freiraum 28 bewegen können und das Zahnband 23 spannen. Unterhalb des Mittelteils 1 ist ein Verlängerungskörper 34 gezeigt, der gemeinsam mit dem Mittelkörper 31 das Gehäuse bildet. Beide Teile sind mit Kühlkanälen 32 versehen, die in diesem Fall schraubenförmig verlaufen und mit Wasser gekühlt sind. In der Fig. 1 sind nur die Kühlflüssigkeitsanschlüsse 33 gezeigt, wobei selbstverständlich in einem nicht dargestellten Teil auch die entsprechenden Kühlflüssigkeitsaustritte vorhanden sind. In den Teilen 31 und 34, die das Gehäuse bilden, ist ein zylindrischer Hohlraum 35. Im unteren Teil der Fig. 1 ist ein konischer Düsenkörper 37 dargestellt, der mit einem Flansch 36 versehen ist. Die Düse 3 enthält auch Kühlanschlüsse 38, wobei im vorliegenden Beispiel für alle Anschlüsse ein Kühlgas verwendet wird. Für die Anschlüsse 38, die einen Brennfleck 39 eines Werkstückes 40 kühlen, kann man auch eine Kühlflüssigkeit verwenden.

Gleiche Teile sind in allen Zeichnungen mit denselben Bezugsziffern versehen.

Die Fig. 2 zeigt eine Draufsicht auf die Tragplatte 15. In der Mitte ist der Durchlass 16 für die Laserstrahlen vorgesehen. Die Zahnräder 12.1 bis 12.3 sind als ein gleicharmiges Dreieck verteilt und mit dem schon erwähnten Zahnband 23 umschlungen. Dieses Zahnband 23 wird mit Hilfe des Zahnrads 12.4 angetrieben, dessen Verbindung mit dem Antriebsmotor 25 schon anhand der Fig. 1 beschrieben wurde. Zwei Führungsbolzen 42 sind in länglichen Ausnehmungen 41 verschiebbar gelagert und mit dem Gehäuse des Antriebsmotors 25 aus der Fig. 1 verbunden, so dass sie die richtige Lage des druckbeanspruchten Antriebmotors 25 sichern. In den Ecken der Tragplatte 15 sind vier Gewindebohrungen 43 für Schrauben 17 angeordnet, die eine einfache Verbindung des Deckels 2 mit dem Mittelteil 1 ermöglichen. In dieser Fig. 2 sind auch die axialen Bohrungen 44.1 bis 44.3 der Spindelbolzen 8.1 bis 8.3 gezeigt, die die obenbeschriebene Kühlung der Linsenfassung 5 oder das ebenfalls schon beschriebene Messen oder das Führen der Faseroptik erlauben. Die Zahnräder 12.1 bis 12.3 weisen dieselbe Anzahl von Zähnen auf, um die gleichmässige Rotation aller drei Spindelbolzen 8.1 bis 8.3 zu sichern.

Die in der Fig. 3 dargestellte untere Fläche 45 des oberen Teils 5' der Linsenfassung 5 zeigt ebenfalls die Verteilung der axialen Bohrungen 44.1 bis 44.3 der Spindelbolzen 8.1 bis 8.3. Die axiale Bohrung 44.1 wird als ein Zufuhrkanal für das Kühlmittel verwendet, die axiale Bohrung 44.2 als ein Abfuhrkanal. Zwischen ihnen ist in der unteren Fläche des oberen Teils 5' der Linsenfassung 5 der eigentliche Kühlkanal 6 der Linsenfassung 5 ausgebildet, der so geführt ist, dass man verhältnismässig gleichmässige Kühlung der ganzen Linsenfassung 5 erreicht.

Die Kühlkanäle der Linsenfassung können auch anders ausgebildet werden. Ebenfalls der Düsenkörper 37 und seine Kühlung und die Kühlung des Brennflecks 39, die an sich bekannt sind, können anders ausgebildet werden. Dasselbe betrifft auch die Kühlung und Ausbildung des Gehäuses 31, 34.

**Patentansprüche**

1. Verfahren zum Fokussieren einer Linse bei der Laserstrahl-Bearbeitung eines Werkstückes, wobei eine in einer Linsenfassung gehaltene Linse mittels eines Antriebsmotors entlang der optischen Achse bewegt wird, dadurch gekennzeichnet, daß die Linse (4) mittels wenigstens zwei gleichbewegten auf der Linsenfassung (5) befestigten Spindelbolzen (8.1 bis 8.3) in Richtung der optischen Achse in die, die gewünschte Brennfleckposition (39) erzeugende Lage durch Drehung von die Spindelbolzen (8.1 bis 8.3) umfassenden, mit einem inneren Gewinde versehenen, dieselbe Anzahl von Zähnen aufweisenden Zahnrädern (12.1 bis 12.3) in einem Hohlraum (35) eines Mittelkörpers (31) eingestellt wird, wobei die Zahnräder (12.1 bis 12.3) durch den Antriebsmotor (25) mit einem Antriebszahnrad (12.4) über ein Zahnband (23) angetrieben werden und die gesamte Antriebseinheit (12.1 bis 12.3, 12.4; 23, 25) von einer Tragplatte (15) getragen wird, und dass die Linsenfassung (5) mittels wenigstens eines inneren Kühlkanals (6) gekühlt wird.

2. Verfahren nach Anspruch 1, dadurch gekennzeichnet, daß die Linse (4) über die Linsenfassung (5) mittels drei Spindelbolzen (8.1 bis 8.3) eingestellt wird.

3. Verfahren nach Anspruch 1, dadurch gekennzeichnet, daß ein Kühlmittel in die Linsenfassung (5) durch wenigstens eine axiale Bohrung (44.1 bis 44.3) in wenigstens einem Spindelbolzen (8.1 bis 8.3) zu- und/oder abgeführt wird.

4. Verfahren nach Anspruch 3, dadurch gekennzeichnet, daß das Kühlmittel direkt durch die axiale Bohrung (44.1) eines Spindelbolzens (8.1) zur Linsenfassung (5) zugeführt und direkt durch die andere Bohrung (44.2) eines anderen Spindelbolzens (8.2) aus der Linsenfassung (5) abgeführt wird.

5. Verfahren nach Anspruch 3, dadurch gekennzeichnet, daß das Kühlmittel durch in wenigstens eine Bohrung (44.1, 44.2) eines Spindelbolzens (8.1 bis 8.3) eingelegte Röhrchen geführt wird.

6. Verfahren nach Anspruch 2, dadurch gekennzeichnet, daß durch eine axiale Bohrung (44.1 bis 44.3) eines Spindelbolzens (8.1 bis 8.3) die Temperatur der Linsenfassung (5) und/oder der Gasdruck unter der Linse (4) gemessen werden und/oder durch eine Faseroptik eine Bildinformation zur Auswertung nach außen geführt wird.

7. Verfahren nach Anspruch 2, dadurch gekennzeichnet, daß durch wenigstens eine axiale Bohrung (44.1 bis 44.3) wenigstens eines Spindelbolzens (8.1 bis 8.3) in den Hohlraum der Düse (3) ein Schneid- oder Schutzgas zugeführt wird.

8. Vorrichtung zur Durchführung des Verfahrens nach Anspruch 1 mit einer in einer Linsenfassung gehaltenen und mittels eines Antriebsmotors entlang der optischen Achse bewegten Linse, dadurch gekennzeichnet, daß die die Linsenfassung (5) der Linse (4) tragenden Spindelbolzen (8.1 bis 8.3) mit ihren Gewinden (9.1 bis 9.3) in inneren Gewinden der Zahnräder (12.1 bis 12.3) eingeschraubt sind und dass in die Zahnräder (12.1 bis 12.3) die Zähne eines Zahnbandes (23) eingreifen, wobei die Zähne des Zahnbandes (23) in ein Zahnrad (12.4) eingreifen, das mit einer Welle (26) des Antriebsmotors (25) verbunden ist. (Fig. 1, 2)

9. Vorrichtung nach Anspruch 8, dadurch gekennzeichnet, daß der Antriebsmotor (25) in der Zahnbandebene mit dem Zahnrad (12.4) verschiebbar gelagert und mittels Führungsbolzen (42) in länglichen Ausnehmungen (41) feststellbar gelagert ist. (Fig. 1, 2)

10. Vorrichtung nach Anspruch 8, dadurch gekennzeichnet, daß die Zahnräder (12.1 bis 12.3) der Spindelbolzen (8.1 bis 8.3) mit je einer Hülse (13.1 bis 13.3) versehen sind, wobei die Hülse (13.1 bis 13.3) im Kontakt mit je einem radialen Teil des axial-radialen Lagers (22) steht, und dass der axiale Teil des axial-radialen Lagers (22) die obere Fläche des Zahnrades (12.1 bis 12.3) abstützt. (Fig. 1, 2)

11. Vorrichtung nach Anspruch 8, dadurch gekennzeichnet, daß wenigstens ein Verlängerungskörper (34) mit einem zylindrischen Hohlraum (35) vorgesehen ist, der mit Verbindungsmitteln zur Verlängerung des Mittelkörpers (31) versehen ist. (Fig. 1)

12. Vorrichtung nach Anspruch 11, dadurch gekennzeichnet, daß der wenigstens eine Verlängerungskörper (34) und/oder der Mittelkörper (31) mit Kühlkanälen (32) versehen sind. (Fig. 1)

13. Vorrichtung nach Anspruch 8, dadurch gekennzeichnet, daß wenigstens einer der Spindelbolzen (8.1 bis 8.3) mit einer axialen Bohrung (44.1 bis 44.3) zur Führung des Kühlmittels für die Linsenfassung (5) der Linse (4) und/oder zur Führung der Anschlüsse zum Messen der Temperatur der Linsenfassung (5) und/oder zum Messen des Gasdruckes unterhalb der Linse und/oder zur Führung einer Faseroptik für eine Bildinformation zur Auswertung nach außen versehen ist. (Fig. 2, 3)

14. Vorrichtung nach Anspruch 8, dadurch gekennzeichnet, daß die Linsenfassung (5) aus einem oberen Teil (5') und einem unteren Teil (5'') besteht und dass in wenigstens einer Kontaktfläche dieser zwei Teile (5', 5'') wenigstens ein Kühlkanal (6) ausgebildet ist. (Fig. 1, 3)

15. Vorrichtung nach Anspruch 11, dadurch gekennzeichnet, daß der Mittelkörper (31) mit einem Deckel (2) in Form einer Platte (14) mit einem Durchlaß (16) versehen ist und dass in diesem Deckel (2) die axial-radialen Lager (22) zur Abstützung der Zahnräder (12.1 bis 12.3) eingebettet sind. (Fig. 1)

## Claims

1. A method for focusing a lens when processing a workpiece using a laser beam, a lens held in a lens frame being moved along the optical axis by means of a drive motor, characterised in that the lens (4) is adjusted, by means of at least two identically moved spindle bolts (8.1 to 8.3) fixed on the lens frame (5), in the direction of the optical axis into the situation producing the desired focal spot position (39), by rotation of cogwheels (12.1 to 12.3) surrounding the spindle bolts (8.1 to 8.3) and provided with an inner thread all having the same number of teeth, in a cavity (35) of a central body (31), the cogwheels (12.1 to 12.3) being driven by the drive motor (25) with a drive cogwheel (12.4) via a toothed belt (23), and the whole drive unit (12.1 to 12.3, 12.4; 23, 25) being borne by a carrying plate (15); and in that the lens frame (5) is cooled by at least one inner cooling duct (6).

2. A method according to Claim 1, characterised in that the lens (4) is adjusted via the lens frame (5) by means of three spindle bolts (8.1 to 8.3).

3. A method according to Claim 1, characterised in that a cooling agent is conveyed into and/or removed from the lens frame (5) by at least one axial bore (44.1 to 44.3) in at least one spindle bolt (8.1 to 8.3).

4. A method according to Claim 3, characterised in that the cooling agent is conveyed to the lens frame direct through the axial bore (44.1) of a spindle bolt (8.1) and removed from the lens frame (5) direct through the other bore (44.2) of another spindle bolt (8.2).

5. A method according to Claim 3, characterised in that the cooling agent is guided through a small tube inserted in at least one bore (44.1, 44.2) of a spindle bolt (8.1 to 8.3).

6. A method according to Claim 3, characterised in that the temperature of the lens frame (5) and/or the gas pressure under the lens (4) are measured through an axial bore (44.1 to 44.3) of a spindle bolt (8.1 to 8.3), and/or a visual information is conveyed outwards by fibre optics for evaluation.

7. A method according to Claim 2, characterised in that a cutting or protective gas is conveyed into the cavity of the nozzle (3) through at least one axial bore (44.1 to 44.3) of at least one spindle bolt (8.1 to 8.3).

8. A device for carrying out the method according to Claim 1 with a lens held in a lens frame and moved along the optical axis by means of a drive motor, characterised in that the spindle bolts (8.1 to 8.3) bearing the lens frame (5) of the lens (4) are screwed with their threads (9.1 to 9.3) in inner threads of the cogwheels (12.1 to 12.3), and in that the teeth of a toothed belt (23) mesh with the cogwheels (12.1 to 12.3), the teeth of the toothed belt (23) meshing with a cogwheel (12.4) which is connected with a shaft (26) of the drive motor (25). (Fig. 1.2)

9. A device according to Claim 8, characterised in that the drive motor (25) is displaceably mounted with the cogwheel (12.4) in the plane of the toothed belt and is mounted by means of guiding bolts (42) in oblong recesses (41) so that its position can be ascertained. (Fig. 1,2)

10. A device according to Claim 8, characterised in that the cogwheels (12.1 to 12.3) of the spindle bolts (8.1 to 8.3) are each provided with a sleeve (13.1 to 13.3), the sleeve (13.1 to 13.3) being in contact with each radial part of the axial-radial bearing (22), and in that the axial part of the axial-radial bearing (22) supports the upper surface of the cogwheel (12.1 to 12.3). (Fig. 1.2)

11. A device according to Claim 8, characterised in that at least one extension member (34) is provided with a cylindrical cavity (35), which is provided with connection means for extending the central body (31). (Fig. 1)

12. A device according to Claim 11, characterised in that the at least one extension member (34) and/or the central body (31) are provided with cooling ducts (32). (Fig. 1)

13. A device according to Claim 8, characterised in that at least one of the spindle bolts (8.1 to 8.3) is provided with an axial bore (44.1 to 44.3) for guiding the cooling agent for the lens frame (5) of the lens (4) and/or for guiding the connections for measuring the temperature of the lens frame (5) and/or for measuring the gas pressure below the lens and/or for guiding fibre optics for a visual information for evaluation outwards. (Fig. 2, 3)

14. A device according to Claim 8, characterised in that the lens frame (5) consists of an upper part (5') and a lower part (5") and in that at least one cooling duct (6) is formed in at least one contact surface of these two parts (5', 5"). (Fig. 1. 3)

15. A device according to Claim 11, characterised in that the central body (31) is provided with a lid (2) in the form of a plate (14) with a through-passage (16) and in that the axial-radial bearings (22) for supporting the cogwheels (12.1 to 12.3) are embedded in this lid (2). (Fig. 1)

**Revendications**

1. Procédé de focalisation au cours de l'usinage d'une pièce par rayon laser, une lentille maintenue dans une monture de lentille étant déplacée au moyen d'un moteur d'entraînement le long d'un axe optique, caractérisé en ce que la lentille (4) est placée dans un volume creux (35) d'un corps central (31) au moyen d'au moins deux pivots à broche (8.1 à 8.3) fixés sur la monture (5) de lentille, déplacés de façon identique dans la direction de l'axe optique vers l'emplacement qui crée la position souhaitée de foyer linéaire (39) par rotation de roues dentées (12.1 à 12.3) entourant les pivots à broche (8.1 à 8.3) comportant un filetage intérieur, et présentant le même nombre de dents, les roues dentées (12.1 à 12.3) étant entraînées par le moteur d'entraînement (25) à l'aide d'une roue dentée d'entraînement (12.4) par l'intermédiaire d'une courroie dentée (23) et toute l'unité d'entraînement (12.1 à 12.3, 12.4; 23, 25) étant supportée par une plaque de support (15), et en ce que la monture de lentille (5) est refroidie au moins à l'aide d'un canal de refroidissement intérieur (6).

2. Procédé selon la revendication 1, caractérisé en ce que la lentille (4) est montée sur la monture de lentille (5) au moyen de trois pivots à broche (8.1 à 8.3).

3. Procédé selon la revendication 1, caractérisé en ce qu'un milieu refroidissant est amené à la monture de lentille (5) ou en est évacué au moins par un alésage axial (44.1 à 44.3) dans au moins un pivot à broche (8.1 à 8.3).

4. Procédé selon la revendication 3, caractérisé en ce que le milieu de refroidissement est directement amené par l'alésage axial (44.1) d'un pivot à broche (8.1) à la monture de lentille (5) et en ce qu'il est directement évacué de la monture de lentille par l'autre alésage (44.2) d'un autre pivot à broche (8.2).

5. Procédé selon la revendication 3, caractérisé en ce que le milieu refroidissant est amené par de petits tubes placés dans au moins un alésage (44.1, 44.2) d'un pivot à broche (8.1 à 8.3).

6. Procédé selon la revendication 2, caractérisé en ce que la température de la monture (5) de lentille et/ou la pression de gaz sous la lentille (4) sont mesurées à travers un alésage axial (44.1 à 44.3) d'un pivot à broche (8.1 à 8.3) et/ou en ce qu'une information visuelle d'évaluation est transmise à l'extérieur par une fibre optique.

7. Procédé selon la revendication 2, caractérisé en ce qu'un gaz de coupe ou gaz protecteur est amené au moins par un alésage axial (44.1 à 44.3) d'au moins un pivot à broche (8.1 à 8.3) dans le volume creux de la buse (3).

8. Dispositif destiné à la mise en œuvre du procédé selon la revendication 1 comportant une lentille maintenue dans une monture de lentille et déplacée le long d'un axe optique à l'aide d'un moteur d'entraînement, caractérisé en ce que les pivots à broche (8.1 à 8.3) portant la monture (5) de lentille de la lentille (4) sont vissés par les filetages (9.1 à 9.3) dans des filetages intérieurs des roues dentées (12.1 à 12.3) et en ce que les dents d'une courroie dentée (23) pénètrent dans les roues dentées (12.1 à 12.3), les dents de la courroie dentée (23) s'engrenant dans une roue dentée (12.4) qui est reliée avec un arbre (26) du moteur d'entraînement (25) (Fig. 1, 2).

9. Dispositif selon la revendication 8, caractérisé en ce que le moteur d'entraînement (25) est logé en coulissement dans le plan de denture de la roue dentée (12.4) et logé en pouvant être fixé à l'aide de boulons du guidage (42) dans des évidements allongés (41) (Fig. 1, 2).

10. Dispositif selon la revendication 8, caractérisé en ce que les roues dentées (12.1 à 12.3) des pivots à broche (8.1 à 8.3) comportent chacun une douille (13.1 à 13.3), la douille (13.1 à 13.3) étant en contact avec une partie radiale respective du logement axial-radial (22) et en ce que la partie axiale du logement axial-radial (22) supporte la surface supérieure de la roue dentée (12.1 à 12.3) (Fig. 1, 2).

11. Dispositif selon la revendication 8, caractérisé en ce qu'au moins un corps de prolongement (34) comprend un volume creux cylindrique (35), qui comporte des éléments de liaison pour prolonger le corps central (31) (Fig. 1).

12. Dispositif selon la revendication 11, caractérisé en ce que le corps de prolongement au moins unique (34) et/ou le corps central (31) comportent des canaux de refroidissement (32) (Fig. 1).

13. Dispositif selon la revendication 8, caractérisé en ce qu'au moins l'un des pivots à broche (8.1 à 8.3) comporte un alésage axial (44.1 à 44.3) pour guider le milieu refroidissant destiné à la monture (5) de lentille de la lentille (4) et/ou pour guider les raccords destinés à la mesure de la température de la monture (5) de lentille et/ou pour mesurer la pression de gaz au-dessous de la lentille et/ou pour guider une fibre optique destinée à une information visuelle d'évaluation vers l'extérieur (Fig. 2, 3).

14. Dispositif selon la revendication 8, caractérisé en ce que la monture (5) de lentille se compose d'une partie supérieure (5`) et d'une partie inférieure (5``), et en ce qu'au moins un canal de refroidissement (6) est ménagé dans au moins une surface de contact de ces deux pièces (5`, 5``) (Fig. 1, 3).

15. Dispositif selon la revendication 11, caractérisé en ce que le corps central (31)` comporte un couvercle (2) en forme de plaque (14) comportant un passage (16) et en ce que sont noyés d'un seul couvercle (2) les paliers (22) axiaux-radiaux de protection des roues dentées (12.1 à 12.3) (Fig. 1).

EP 0 216 728 B1

EP 0 216 728 B1

FIG.2

FIG.3